# EUROPEAN PATENT APPLICATION

(11) **EP 2 455 622 A1**
(43) Date of publication of application: **23.05.2012**
(21) Application number: 11186709.9
(22) Date of filing: 26.10.2011
(51) Int. Cl.: F16B 5/02, F16B 33/00

(54) **Fastening structure and swarf tray**

(30) Priority: 19.11.2010 JP 2010258933
(71) Applicant: FDK Twicell Co., Ltd., Gunma 370-0071 (JP)
(72) Inventor: Imaizumi, Minoru, Gunma, 370-0071 (JP); Yamashita, Masanori, Gunma, 370-0071 (JP)
(74) Representative: Epping - Hermann - Fischer

(57) **Abstract**

There are provided a first member (1) provided with a female screw hole (13) leading from a first face (11) to a second face (12); a second member (2) in contact with the first face (11) and provided with a through-hole (21) corresponding to the female screw hole (13); a male screw (3) that is screwed through the through-hole (21) into the female screw hole (13); a swarf tray (4,8) including a surface-contacting portion (41,81) that is in surface contact with the second face (12) and thus covers an opening of the female screw hole (13), which is located on the second-face side, and a depression (42,82) formed in a place coinciding with the female screw hole (13) of the surface-contacting portion (41,81); and a bonding material (5) for bonding the swarf tray (4,8) to the first member (1) at a contact face between the second face (12) and the surface-contacting portion (41,81).

## Description

### BACKGROUND OF THE INVENTION

### Field of the Invention

The present invention relates to a fastening structure including a first member provided with a female screw hole leading from a first face to a second face, a second member in contact with the first face of the first member and provided with a through-hole corresponding to the female screw hole of the first member, and a male screw that is screwed through the through-hole of the second member into the female screw hole of the first member, and also relates to a swarf tray that receives swarf produced from the female screw hole in the fastening structure.

### Description of the Related Art

In the fastening structure mentioned above, when the first and second members are fastened together by turning the male screw inserted in the female screw hole of the first member, a part of the female screw hole is ground, and swarf is produced. The swarf falls from the opening of the female screw hole to be scattered. Such swarf is liable to be produced especially when the first member is made of a relatively soft metal, such as a copper plate. In the case of an electronic device, for example, if swarf falls from the opening of the female screw hole and gets into the inside of the device to be scattered, the swarf sticks to a substrate and the like located inside the device and might short out the circuit, causing a malfunction of the electronic device.

A well-known example of conventional technology designed to prevent the swarf-related malfunction of an electronic device and the like is an air conditioning system in which an electronic device has an inner space that is divided into a space in which swarf might fall to be scattered and a space in which a substrate is placed, for example, by setting a board between a screw-fastened portion and the substrate (see Unexamined Japanese Patent Publication No. 2006-343083).

However, the above-described conventional technology requires the board for dividing the inner space of the electric device to be placed in each of a lot of fastening structures installed in the device. This complicates the inner structure of the electronic device and increases the number of components, which might make a sharp increase in cost of the electronic device.

### SUMMARY OF THE INVENTION

The invention has been made to solve the above-mentioned problem. It is an object of the invention to prevent a malfunction of an electronic device and the like, attributable to swarf produced from a screw-fastened portion, at low cost.

In order to achieve the above object, a fastening structure of the present invention has a first member provided with a female screw hole leading from a first face to a second face; a second member in contact with the first face and provided with a through-hole corresponding to the female screw hole; a male screw that is screwed through the through-hole into the female screw hole; a swarf tray including a surface-contacting portion that is in surface contact with the second face and thus covers an opening of the female screw hole, which is located on the second-face side, and a depression formed in a place coinciding with the female screw hole of the surface-contacting portion; and a bonding material for bonding the swarf tray to the first member at a contact face between the second face and the surface-contacting portion.

Swarf produced from the female screw hole during the turning of the male screw is accumulated in the depression formed in the surface-contacting portion of the swarf tray since the second-face-side opening of the female screw hole is covered with the surface-contacting portion of the swarf tray. This way, the swarf produced from the female screw hole is prevented from falling outside and being scattered, which thus prevents a swarf-related malfunction of the electronic device and the like. Because of a simple and compact constitution in which the opening of the female screw hole is covered by fixing the swarf tray, the invention prevents the falling and scattering of the swarf at still lower cost than ever before. With the fastening structure of the invention, it is possible to achieve the operation and advantage of preventing the malfunction of the electronic device and the like, attributable to swarf produced from the screw-fastened portion, at low cost.

Furthermore, with the fastening structure of the invention, it merely requires a small space to prevent the falling and scattering of the swarf because of the simple and compact constitution in which the opening of the female screw hole is covered by fixing the swarf tray. This lessens the possibility that the electronic device has to become large in size to prevent the swarf-related malfunction of the electronic device and the like.

Moreover, with the fastening structure of the invention, it is possible to apply the invention flexibly to a variety of structures and locations of the screw-fastened portion and a variety of locations of the substrate and the like inside the electronic device because of the simple and compact constitution in which the opening of the female screw hole is covered by fixing the swarf tray.

Another aspect of the fastening structure of the invention is characterized in that the length between an opening and a bottom of the depression of the swarf tray is set equal to or greater than a projection length of a tip end of the male screw protruding from the second face.

The above characteristic makes it possible to prevent an interference between the tip end of the male screw protruding from the second face of the first member and the swarf tray, and thus prevent the swarf tray from being broken or coming off due to contact with the tip end of the male screw.

Another aspect of the fastening structure of the invention is characterized in that the swarf tray is made of a body provided with a through-hole forming an interior face of the depression and a plate-like member forming the bottom of the depression.

Because of the above characteristic, the swarf tray of the invention can be manufactured without difficulty. To be more specific, for example, the body of the swarf tray is provided with through-holes, the number and location of which correspond to those of the female screw holes of the first member. One of ends of the through-holes is closed by bonding the plate-like member to a rear face of the surface-contacting portion of the body. This facilitates the manufacture of the swarf tray in which the depression is formed in the place coinciding with the female screw hole of the surface-contacting portion. It is then possible to prevent the malfunction of the electronic device and the like, attributable to the swarf produced from the screw-fastened portion, at lower cost.

Another aspect of the fastening structure of the invention is characterized in that the body of the swarf tray is made of an elastic body.

With the above characteristic, the swarf tray can be bonded to the first member with the surface-contacting portion of the swarf tray elastically deformed according to a surface shape of the second face of the first member. It is then possible to bond the swarf tray to the first member with a higher adhesion degree of the surface-contacting portion of the swarf tray against the second face of the first member. This lessens the possibility that a gap is created between the second face of the first member and the surface-contacting portion of the swarf tray, and therefore also lessens another possibility that swarf falls through the gap to be scattered. The adhesion strength of the swarf tray against the second face of the first member is further improved, which lessens the possibility that the swarf tray comes off of the first member.

Since the body of the swarf tray is made of the elastic body, machining such as cutting can be carried out with ease. For that reason, a large number of swarf trays can be mass-produced at low cost and with efficiency, for example, by the steps of making a first base material having desired thickness with a material for the body of the swarf tray, producing a lot of through-holes in the first base material at desired intervals, bonding a second base material made of a material for a plate-like member to one side of the first base material, and cutting the result according to the number and locations of the female screw holes of the screw-fastened portion. In result, the mass-production of the swarf trays of the invention is possible at lower cost.

Another aspect of the fastening structure of the invention is characterized in that the swarf tray is made of insulating material.

With the above characteristic, for example, even if the swarf tray falls and comes into contact with the substrate, a short circuit or the like is prevented from occurring.

The swarf tray of the invention is used in a fastening structure including a first member provided with a female screw hole leading from a first face to a second face, a second member in contact with the first face and provided with a through-hole corresponding to the female screw hole, and a male screw that is screwed through the through-hole of the second member into the female screw hole, and receives swarf produced from the female screw hole. The swarf tray includes a surface-contacting portion that is in surface contact with the second face and thus covers a second-face-side opening of the female screw hole, and a depression formed in a place coinciding with the female screw hole of the surface-contacting portion.

With the swarf tray of the invention, in a fastening structure including the swarf tray, the same operation and advantages are provided as in the above-mentioned fastening structure of the invention.

According to another aspect of the swarf tray of the invention, the length between the opening and bottom of the depression is set equal to or greater than the projection length of the tip end of the male screw protruding from the second face.

According to another aspect of the swarf tray of the invention, the swarf tray is made of a body provided with a through-hole forming an interior face of the depression and a plate-like member forming the bottom of the depression.

According to another aspect of the swarf tray of the invention, the body is made of an elastic body.

According to another aspect of the swarf tray of the invention, the swarf tray is made of insulating material.

According to another aspect of the swarf tray of the invention, there is further provided a bonding material attached to the surface-contacting portion.

### BRIEF DESCRIPTION OF THE DRAWINGS

The present invention will become more fully understood from the detailed description given hereinafter and the accompanying drawings which are given by way of illustration only, and thus, are not limitative of the present invention, and wherein:
FIG. 1 is a perspective view showing a first embodiment of a fastening structure of the present invention;
FIG. 2 is a perspective view showing the first embodiment of the fastening structure of the present invention;
FIG. 3 is an exploded perspective view showing the first embodiment of the fastening structure of the present invention;
FIG. 4 is an exploded perspective view showing a swarf tray of the first embodiment;
FIG. 5 is a cross-sectional view showing the first embodiment of the fastening structure of the present invention;
FIG. 6 is a perspective view showing a second embodiment of a fastening structure of the present invention;
FIG. 7 is an exploded perspective view showing the second embodiment of the fastening structure of the present invention; and
FIG. 8A and 8B are a perspective view and a cross-sectional view, respectively, showing the swarf tray of the second embodiment.

### DETAILED DESCRIPTION OF THE PREFERRED EMBODIMENTS

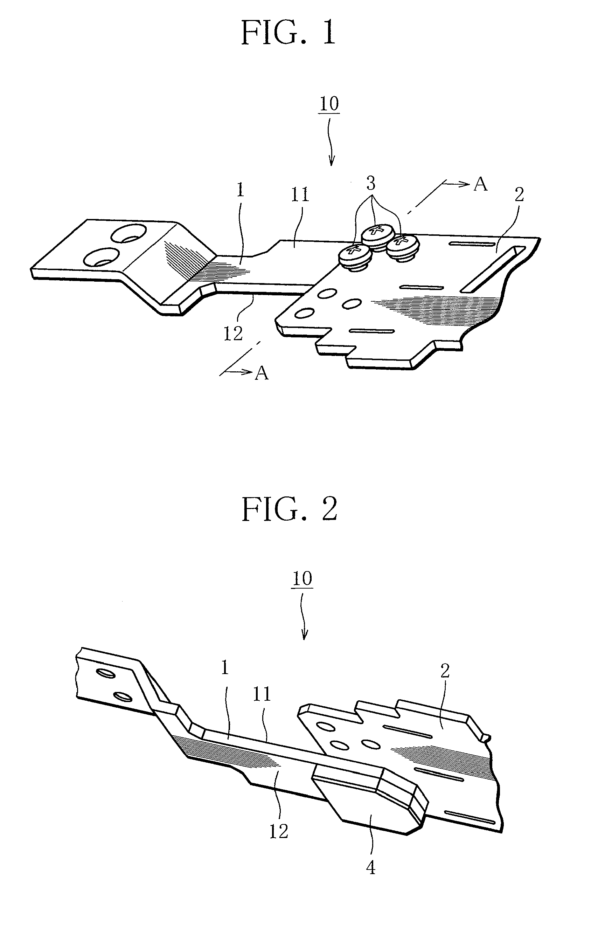

A first embodiment of the invention will be described below with reference to FIGS. 1 to 5.

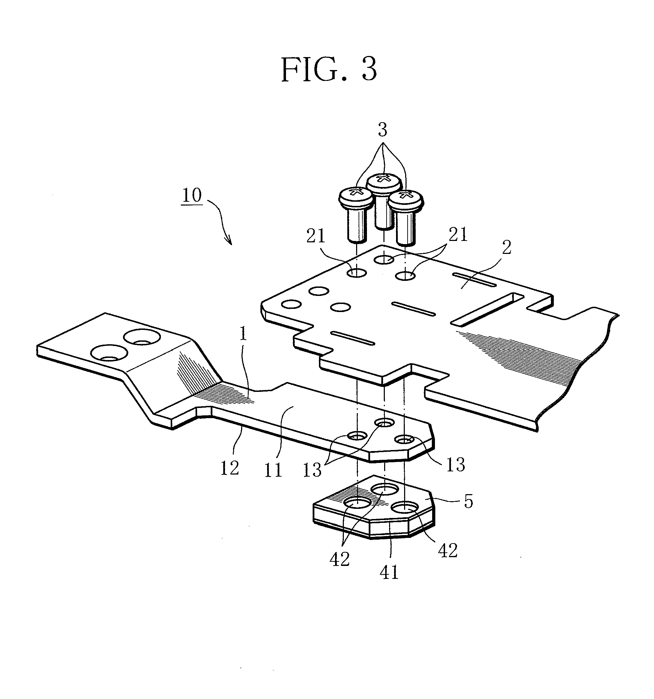

FIGS. 1 and 2 are perspective views showing the first embodiment of a fastening structure 10 of the invention. FIG. 3 is an exploded perspective view showing the first embodiment of the fastening structure 10 of the invention.

The fastening structure 10 of the first embodiment includes a first member 1 provided with a female screw hole 13 leading from a first face 11 to a second face 12; a second member 2 in contact with the first face 11 of the first member 1 and provided with a through-hole 21 corresponding to the female screw hole 13; a male screw 3 that is screwed through the through-hole 21 of the second member 2 into the female screw hole 13; a swarf tray 4 including a surface-contacting portion 41 that is in surface contact with the second face 12 of the first member 1 and thus covers an opening of the female screw hole 13, which is located on the second face 12 side, and a depression 42 formed in a place coinciding with the female screw hole 13 of the surface-contacting portion 41; and a bonding material 5 for bonding the swarf tray 4 to the first member 1 at a contact face between the second face 12 and the surface-contacting portion 41.

The first member 1 is a plate-like member made of metal, such as a copper plate, and is provided with three female screw holes 13. The second member 2 is a plate-like member such as a print-circuit board and is provided with three through-holes 21 in size and locations coinciding with the three female screw holes 13 of the first member 1. The swarf tray 4 includes three depressions 42 formed in the surface-contacting portion 41 at locations coinciding with the female screw holes 13 of the first member 1. Although a bonding material 5 attached to the surface-contacting portion 41 is a double-sided tape in this embodiment, any bonding material including liquid bonding material and the like may be used as long as the material is capable of bonding the swarf tray 4 to the first member 1.

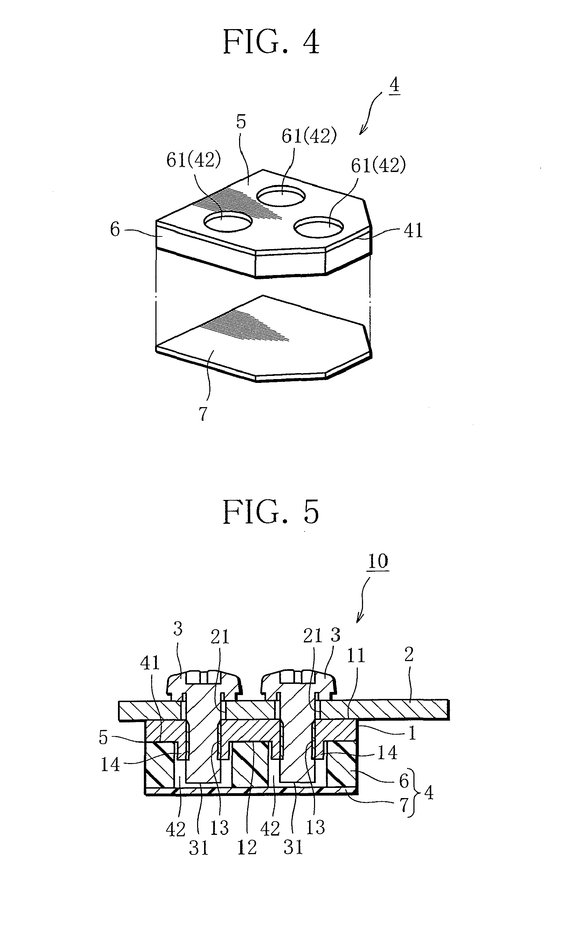

FIG. 4 is an exploded perspective view showing the swarf tray 4 of the first embodiment.

The swarf tray 4 of the first embodiment is made of a body 6 provided with a through-hole 61 forming an interior face of the depression 42; a plate-like member 7 forming a bottom of the depression 42; and the bonding material 5 attached to the surface-contacting portion 41.

The bonding material 5 may be attached to the surface-contacting portion 41 when the swarf tray 4 is bonded to the first member 1, instead of when the swarf tray 4 is produced. However, the bonding material 5 is preferably attached to the surface-contacting portion 41 in advance as mentioned above. This improves the work efficiency in bonding the swarf tray 4 to the first member 1.

The body 6 may be made of any kind of material, but is preferably made of an insulating elastic body, such as a rubber material, sponge, etc. By so doing, for example, even if the swarf tray falls and comes into contact with a substrate or the like, a short circuit or the like is prevented from occurring. Since the body 6 is made of the elastic body, the swarf tray 4 can be bonded to the first member 1 with the surface-contacting portion 41 of the swarf tray 4 elastically deformed according to a surface shape of the second face 12 of the first member 1. As a result, the bonding of the swarf tray 4 is carried out with a higher adhesion degree of the surface-contacting portion 41 of the swarf tray 4 against the second face 12 of the first member 1. In other words, it becomes less likely that a gap is created between the second face 12 of the first member 1 and the surface-contacting portion 41 of the swarf tray 4, and this lessens the possibility that swarf falls through the gap to be scattered. Since the adhesion strength of the swarf tray 4 against the second face 12 of the first member 1 is further improved, it becomes less likely that the swarf tray 4 will come off and fall out of the first member 1.

The plate-like member 7 may be made of any kind of material, but is preferably made of an insulating material, such as a cardboard, a plastic plate, etc. By so doing, for example, even if the swarf tray 4 falls and comes into contact with the substrate or the like, a short circuit or the like is prevented from occurring.

Due to the above constitution, the swarf tray 4 of the first embodiment can be produced with ease and at low cost, for example, through the following steps. First, the bonding material 5 (double-sided tape) is affixed to the entire surface that serves as the surface-contacting portion 41 of the body 6. Three through-holes 61 are formed in the body 6 so as to correspond to the three female screw holes 13 of the first member 1 in terms of locations and diameters. One-side ends of the three through-holes are closed by bonding the plate-like member 7 to a rear face serving as the surface-contacting portion 41 of the body 6.

Due to the above constitution, the swarf tray 4 of the first embodiment can be efficiently mass-produced at low cost, for example, by the steps of making a first base material having desired thickness with a material made of material for the body 6, providing a lot of through-holes 61 in the first base material at desired intervals, bonding a second base material made of the material for the plate-like member 7 to one side of the first base material, and cutting the result according to the number and locations of the female screw holes 13 of a screw-fastened portion.

FIG. 5 is a cross-sectional view showing the first embodiment of the fastening structure 10 of the invention, taken along line A—A (FIG. 1).

The fastening structure 10 of the first embodiment is a structure in which the second member 2 is in contact with the first face 11 of the first member 1, and the male screw 3 is screwed through the through-hole 21 into the female screw hole 13 and turned in a fastening direction, to thereby fasten the first and second members 1 and 2 together. The swarf produced from the female screw hole 13 during the turning of the male screw 3 is accumulated in the depression 42 formed in the surface-contacting portion 41 of the swarf tray 4 since the opening of the female screw hole 13, which is located on the second face 12 side, is covered with the surface-contacting portion 41 of the swarf tray 4. The swarf produced from the female screw hole 13 is therefore prevented from falling outside and being scattered, which prevents the swarf-related malfunction of an electronic device and the like. Because of the simple and compact constitution in which the opening of the female screw hole 13 is covered by fixing the swarf tray 4, the invention prevents the falling and scattering of the swarf at still lower cost than ever before.

Preferably, the depression 42 of the swarf tray 4 has an internal diameter that is set equal to or larger than an internal diameter of the female screw hole 13. This enables the swarf produced from the female screw hole 13 to be accumulated in the depression 42 without fail. If there is provided a ring-like protrusion 14, which is a projecting part of the female screw hole 13, in the second face 12 of the first member 1 as in the embodiment, the depression 42 of the swarf tray 4 may be so formed as to have an internal diameter larger than an external diameter of the ring-like protrusion 14.

For example, in a state where the first and second members 1 and 2 are fastened together by using the male screw 3, if a tip end 31 of the male screw 3 is protruding from the second face 12 of the first member 1 as in the embodiment, the length between the opening and bottom of the depression 42 of the swarf tray 4 is preferably set equal to or longer than projection length of the tip end 31 of the male screw 3. More specifically, in consideration of variation in length of the male screw 3 or the like, the length between the opening and bottom of the depression 42 of the swarf tray 4 is preferably set longer, for example, by about 1 mm than the projection length of the tip end 31 of the male screw 3. This makes it possible to prevent an interference between the tip end of the male screw 3 protruding from the second face 12 of the first member 1 and the swarf tray 4, thereby preventing the swarf tray 4 from being broken or coming off due to contact with the tip end 31 of the male screw 3.

As described above, the invention offers the operation and advantage of preventing the malfunction of the electronic device or the like, attributable to the swarf produced from the screw-fastened portion, at low cost. Since the invention employs the simple and compact constitution in which the opening of the female screw hole 13 is covered by fixing the swarf tray 4, it is possible to prevent the falling and scattering of the swarf in a small space. It is then possible to lessen the possibility that the electronic device will become large in size as a result of prevention of the swarf-related malfunction of the electronic device. Moreover, because of the simple and compact constitution in which the opening of the female screw hole 13 is covered by fixing the swarf tray 4, it is possible to apply the invention flexibly to a variety of structures and locations of the screw-fastened portion and a variety of locations of the substrate and the like inside the electronic device.

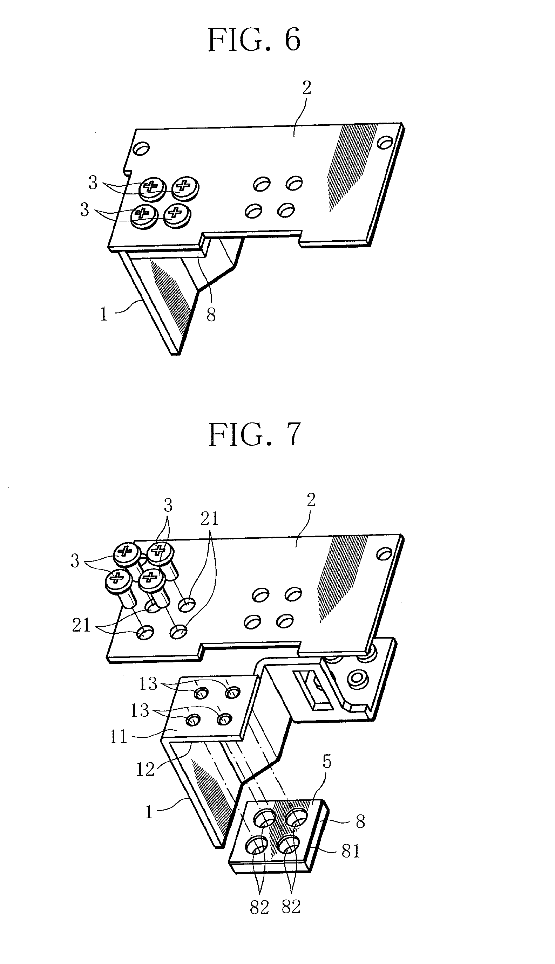

A second embodiment of the invention will be described with reference to FIGS. 6 to 8.

FIG. 6 is a perspective view showing the second embodiment of the fastening structure 10 of the present invention. FIG. 7 is an exploded perspective view showing the second embodiment of the fastening structure 10 of the present invention.

The fastening structure 10 of the second embodiment differs from that of the first embodiment in that the first member 1 is provided with four female screw holes 13, and that the second member 2 with four through-holes 21 at positions coinciding with the four female screw holes 13 of the first member 1. A swarf tray 8 of the second embodiment is provided with four depressions 82 and is different from the swarf tray 4 of the first embodiment in shape and structure.

The other parts of the constitution are the same as the first embodiment. Constituents identical to those of the first embodiment will be provided with the same reference marks, and the detailed description thereof will be omitted.

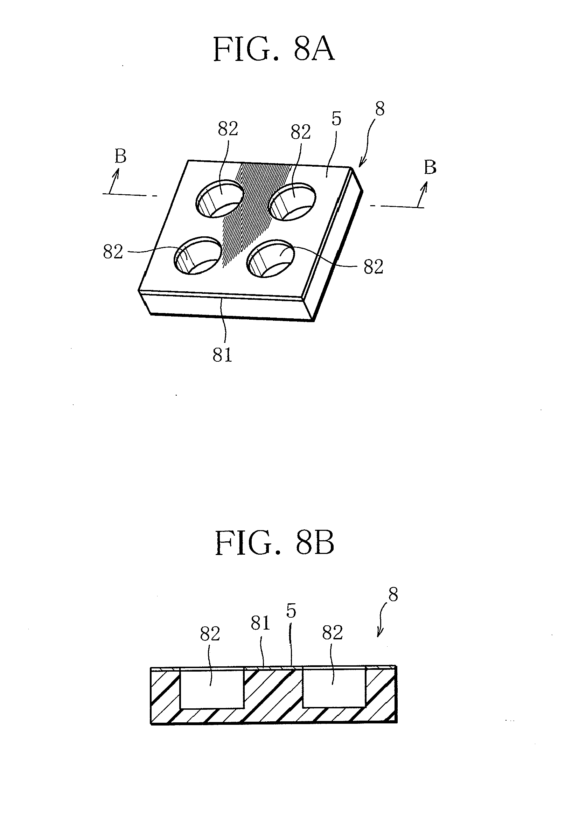

FIG. 8 shows the swarf tray 8 of the second embodiment. FIG. 8A is a perspective view of the swarf tray 8, and FIG. 8B shows a cross-section of the swarf tray 8, taken along line B—B (FIG. 8A).

The swarf tray 8 of the second embodiment includes a surface-contacting portion 81 that comes into surface contact with the second face 12 of the first member 1 and thus covers the openings of the four female screw holes 13, which are located on the second face 12 side, and the four depressions 82 formed in places coinciding with the four female screw holes 13 of the surface-contacting portion 81. The depressions 82 of the swarf tray 8 of the second embodiment are identical to the depressions 42 of the swarf tray 4 of the first embodiment, apart from the number and locations thereof, so that the description thereof will be omitted. The surface-contacting portion 81 of the swarf tray 8 is provided with the bonding material 5 as in the first embodiment. Unlike the swarf tray 4 of the first embodiment, the swarf tray 8 of the second embodiment is formed by injecting synthetic resin such as plastic into a mold.

The invention can be carried out according to the above aspect. As with the first embodiment, the second embodiment also offers the operation and advantage of preventing the malfunction of the electronic device and the like, attributable to the swarf produced from the screw-fastened portion, at low cost.

Needless to say, the invention is not particularly limited to the foregoing embodiment, but may be modified in various ways within the scope of the invention defined in claims.

For example, the shape, size, number and locations of the depressions of the swarf tray are not particularly limited to the foregoing embodiments, and may be properly determined according to the size, number, locations and the like of the female screw holes of the first member. The depressions of the swarf tray are so disposed as to correspond to their respective female screw holes in the foregoing embodiments. For example, however, a depression of a size corresponding to a plurality of female screw holes may be provided so that the swarf produced from the female screw holes is accumulated in the single depression.

## Claims

1. A fastening structure (10) having a first member (1) provided with a female screw hole (13) leading from a first face (11) to a second face (12); a second member (2) in contact with the first face (11) and provided with a through-hole (21) corresponding to the female screw hole (13); a male screw (3) that is screwed through the through-hole (21) into the female screw hole (13), **characterized by** comprising:
a swarf tray (4, 8) including a surface-contacting portion (41, 81) that is in surface contact with the second face (12) and thus covers an opening of the female screw hole (13), which is located on the second-face (12) side, and a depression (42, 82) formed in a place coinciding with the female screw hole (13) of the surface-contacting portion (41, 81); and
a bonding material (5) for bonding the swarf tray (4, 8) to the first member (1) at a contact face between the second face (12) and the surface-contacting portion (41, 81).

2. The fastening structure (10) according to claim 1, **characterized in that**
the length between the opening and the bottom of the depression (42, 82) of the swarf tray (4, 8) is set equal to or greater than the projection length of the tip end of the male screw (3) protruding from the second face (12).

3. The fastening structure (10) according to claim 1 or 2, **characterized in that**
the swarf tray (4) is made of a body (6) provided with a through-hole (61) forming an interior face of the depression (42) and a plate-like member (7) forming the bottom of the depression (42).

4. The fastening structure (10) according to claim 3, **characterized in that**
the body (6) is made of an elastic body.

5. The fastening structure (10) according to any one of claims 1 to 4, **characterized in that**
the swarf tray (4, 8) is made of insulating material.

6. A swarf tray (4, 8) that is used in a fastening structure (10) including a first member (1) provided with a female screw hole (13) leading from a first face (11) to a second face (12), a second member (2) in contact with the first face (11) and provided with a through-hole (21) corresponding to the female screw hole (13), and a male screw (3) that is screwed through the through-hole (21) of the second member (2) into the female screw hole (13), and receives swarf produced from the female screw hole (13), **characterized by** comprising:
a surface-contacting portion (41, 81) that is in surface contact with the second face (12) and thus covers an opening of the female screw hole (13), which is located on the second face (12) side; and
a depression (42, 82) formed in a place coinciding with the female screw hole (13) of the surface-contacting portion (41, 81).

7. The swarf tray (4, 8) according to claim 6, **characterized in that**
the length between the opening and bottom of the depression (42, 82) is set equal to or greater than the projection length of the tip end of the male screw (3) protruding from the second face (12).

8. The swarf tray (4) according to claim 6 or 7, **characterized by** being made of:
a body (6) provided with a through-hole (61) forming an interior face of the depression (42) and a plate-like member (7) forming the bottom of the depression (42).

9. The swarf tray (4) according to claim 8, **characterized in that**
the body (6) is made of an elastic body.

10. The swarf tray (4,8) according to any one of claims 6 to 9, **characterized by** being made of insulating material.

11. The swarf tray (4,8) according to any one of claims 6 to 10, **characterized by** further including a bonding material (5) attached to the surface-contacting portion (41, 81).
